# EUROPEAN PATENT APPLICATION

(11) **EP 2 858 192 A1**
(43) Date of publication of application: **08.04.2015**
(21) Application number: 13187521.3
(22) Date of filing: 07.10.2013
(51) Int. Cl.: H02G 3/18

(54) **Mounting box assembly**

(71) Applicant: ABB Oy, 00380 Helsinki (FI)
(72) Inventor: Andersson, Johan, 06100 Porvoo (FI)
(74) Representative: Kolster Oy Ab

(57) **Abstract**

A mounting box assembly comprising a box case (2) defining a mounting space, the box case (2) having a box opening (22) providing an access into the mounting space. The mounting box assembly further comprises an extension part (4) defining an extension space, the extension part (4) has a first extension part opening and a second extension part opening, the surface-area of the first extension part opening being larger than the surface-area of the box opening (22), and the surface-area of the second extension part opening being smaller than the surface-area of the first extension part opening, the extension part (4) being adapted to be attached to the box case (2) such that the second extension part opening is located adjacent the box opening (22), and the first extension part opening provides an access into the mounting space through the extension part (4).

## Description

### FIELD OF THE INVENTION

The present invention relates to a mounting box assembly comprising a box case defining a mounting space for accommodating an electrical component at least partially.

Mounting boxes are known in the art. Majority of electrical components, such as socket outlets or light switches, can be installed using the most common mounting box. However, flush mounting of a grounded double socket outlet requires a larger mounting box which is less common.

### BRIEF DESCRIPTION OF THE INVENTION

An object of the present invention is to provide a novel mounting box assembly for flush mounting of a grounded double socket outlet. Another object of the invention is to provide an extension part for the novel mounting box assembly. The objects of the invention are achieved by a mounting box assembly and an extension part which are characterized by what is stated in the independent claims. The preferred embodiments of the invention are disclosed in the dependent claims.

The invention is based on the idea of using a separate extension part for enlarging a mounting space inside a box case of a common mounting box.

An advantage of the mounting box assembly of the invention is that it enables using the most common box case for flush mounting of a grounded double socket outlet. Consequently electrician only needs one type of box case for installing electrical components in a building project.

### BRIEF DESCRIPTION OF THE DRAWINGS

In the following the invention will be described in greater detail by means of preferred embodiments with reference to the attached drawings, in which
Figure 1 shows a mounting box assembly according to an embodiment of the invention;
Figure 2 shows an extension part of the mounting box assembly of Figure 1;
Figure 3 shows a cross section of the mounting box assembly of Figure 1;
Figure 4 shows a cross section of a mounting box assembly with a double socket outlet; and
Figure 5 shows the mounting box assembly of Figure 1 fitted in an opening of a wallboard.

### DETAILED DESCRIPTION OF THE INVENTION

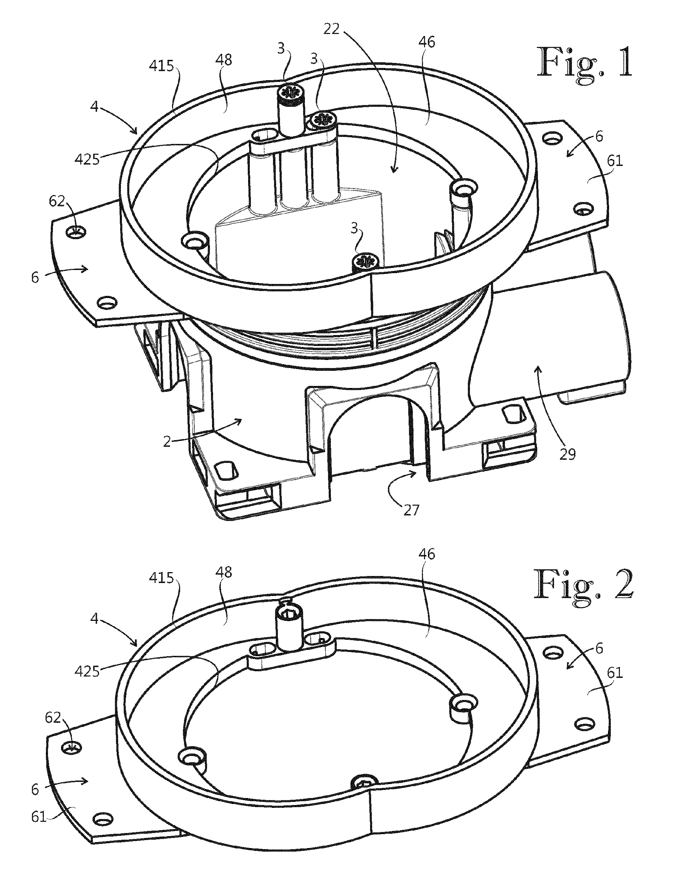

A mounting box assembly of Figure 1 comprises a box case 2 and an extension part 4 attached to the box case 2 with screws 3. The box case 2 defines a mounting space for accommodating an electrical component at least partially. The box case 2 has a box opening 22 providing an access into the mounting space. The extension part 4 defines an extension space. The mounting box assembly is adapted to accommodate a double socket outlet.

Figure 2 shows the extension part 4 separated from the box case 2. The extension part 4 has a first extension part opening at a side thereof and a second extension part opening at an opposite side of the extension part 4 relative to the first extension part opening. In Figures 1 and 2 the first extension part opening is at a top side of the extension part 4, and the second extension part opening is at a bottom side of the extension part 4. Each of the first extension part opening and the second extension part opening provides an access into the extension space. The extension part 4 is attached to the box case 2 such that the second extension part opening is located adjacent the box opening 22, and the first extension part opening provides an access into the mounting space through the extension part 4.

The surface-area of the first extension part opening is larger than the surface-area of the box opening 22, and the surface area of the second extension part opening is substantially the same as the surface area of the box opening 22. In an alternative embodiment the surface-area of the second extension part opening is smaller than the surface-area of the first extension part opening without having substantially the same surface area as the box opening.

An edge 415 of the first extension part opening and an edge 425 of the second extension part opening each define a corresponding plane. The plane corresponding to the edge 415 of the first extension part opening is substantially parallel with the plane corresponding to the edge 425 of the second extension part opening, said planes being located at a distance from each other.

An inner bottom wall 46 of the extension part 4 defines a plane parallel to the plane corresponding to the edge 415 of the first extension part opening, the inner bottom wall 46 surrounding the second extension part opening. An inner side wall 48 of the extension part 4 extends substantially perpendicular to the plane corresponding to the edge 415 of the first extension part opening. The extension space is delimited by the inner bottom wall 46, the inner side wall 48 and the planes corresponding to the edge 415 of the first extension part opening and the edge 425 of the second extension part opening.

Due to the extension space, the extension part 4 enlarges volume of the mounting box assembly. Inner volume of the mounting box assembly is larger than inner volume of the mounting space of the box case 2. Inner space of the mounting box assembly is also deeper than the mounting space of the box case 2. Depth dimension is a dimension perpendicular to the plane corresponding to the edge of the box opening 22. Further, a radial inner dimension of a front portion of the mounting box assembly is larger than a radial inner dimension of a front portion of the box case 2. The radial dimension is a dimension perpendicular to the depth dimension. The front portion of the mounting box assembly is formed by the extension part 4 and the front portion of the box case 2 is the portion which comprises the edge of the box opening 22.

The screws 3 attaching the extension part 4 to the box case 2 extend substantially perpendicular to the plane defined by the edge of the box opening 22. Both the extension part 4 and the box case 2 are provided with screw apertures for the screws 3.

The extension part 4 comprises two side projections 6. Each side projection 6 has a supporting surface 61. Each supporting surface 61 is a planar surface defining a plane located at a distance from the plane corresponding to the edge 415 of the first extension part opening. The planes defined by the two supporting surfaces 61 coincide. The mounting box assembly is adapted to be fitted in an aperture of a wallboard such that the supporting surfaces 61 of the side projections 6 are in contact with an inner side of the wallboard.

Each side projection 6 is provided with two screw apertures 62. Each screw aperture 62 extends through corresponding side projection 6, and is adapted for fastening the extension part 4 to a supporting structure of a wall with a screw. In some cases it is possible to fasten an extension part to a wallboard with a screw extending through a screw aperture of a side projection.

In most embodiments an extension part comprises at least one side projection. However, it is possible to omit side projection.

The box case 2 comprises attachment means for attaching installation conduits to the box case 2. The attachment means comprises attachment members 27 provided on an outer surface of the box case 2, and inlets 29 protruding from the outer surface of the box case 2. Neither attachment members 27 nor inlets 29 comprise through holes for electric wires. During installation work an electrician punctures required holes in the side wall of the box case. In an alternative embodiment a box case may have ready through holes for electric wires in side walls of the box case.

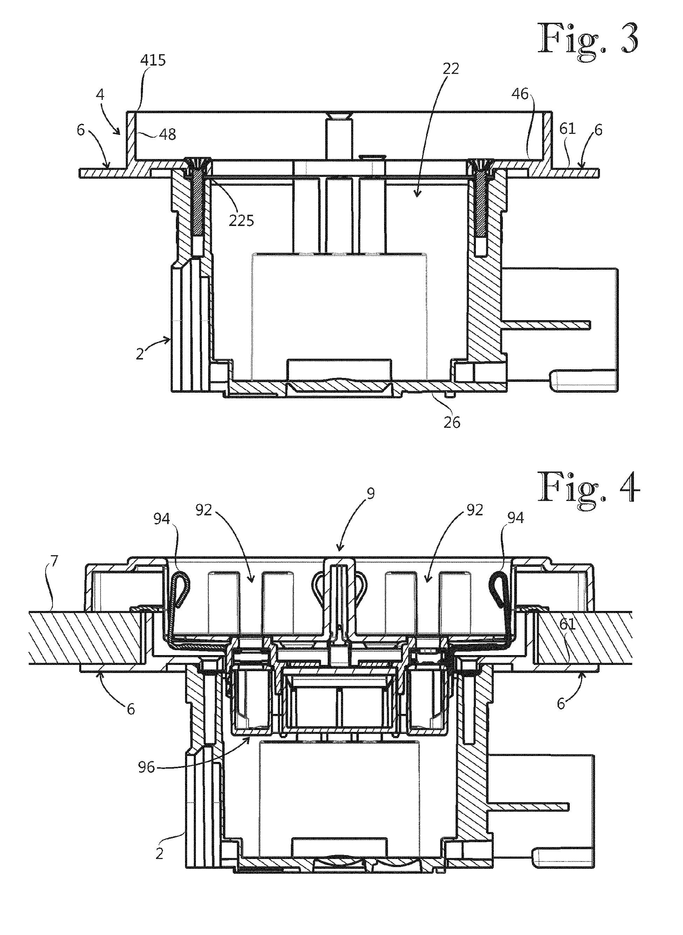

Figure 3 is a cross section of the mounting box assembly of Figure 1. Figure 3 shows that the box case 2 has a back wall 26 defining a plane parallel to the plane corresponding to the edge 415 of the first extension part opening. Figure 3 also shows that an edge 225 of the box opening 22 defines a plane parallel to the plane corresponding to the edge 415 of the first extension part opening.

Figure 4 shows a cross section of a mounting box assembly with a double socket outlet 9. The double socket outlet 9 comprises two recesses 92 in its outer portion. The recesses 92 are located partially within the extension space of the extension part 4. Each recess 92 is adapted to partially accommodate a body of an electric plug. Herein an electric plug is a movable connector attached to a mains cable of an electrical apparatus, and a socket outlet is a component adapted to be fixed on a wall of a building. Each recess 92 is provided with two earthing contacts 94 adapted to be in contact with earthing terminals of the electric plug. In each recess 92 one of the earthing contacts 94 is located radially outer than the mounting space of the box case 2.

An inner portion 96 of the double socket outlet 9 comprises an outlet phase terminal and an outlet neutral terminal adapted to be in contact with corresponding phase terminal and neutral terminal of the electric plug. The outlet phase terminal and outlet neutral terminal, which are not shown in Figure 4, are located within the mounting space of the box case 2. A radial dimension of the outer portion of the double socket outlet 9 is larger than radial dimension of the inner portion 96 of the double socket outlet 9.

Figure 4 shows that the radial dimension of the outer portion of the double socket outlet 9 is larger than radial dimension of the mounting space of the box case 2. The outer portion of the double socket outlet 9 would not fit in the mounting space of the box case 2.

In Figure 4 the mounting box assembly is fitted in an opening of a wallboard 7. The supporting surfaces 61 of the side projections 6 are in contact with an inner side of the wallboard 7.

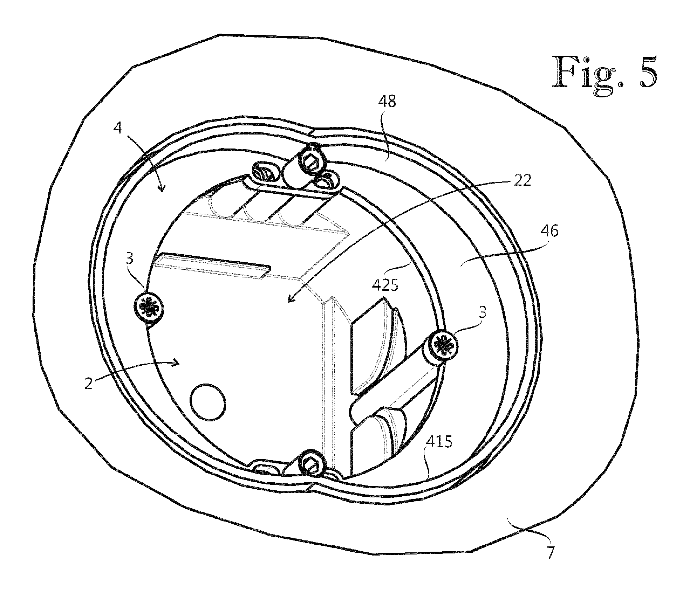

Figure 5 shows the mounting box assembly of Figure 1 fitted in an opening of a wallboard 7. Figure 5 shows that the edge 415 of the first extension part opening is substantially flush with an outer surface of the wallboard 7. The outer surface is the surface of the wallboard 7 which faces the room defined partially by the wallboard 7. The mounting space of the box case 2 is adapted to be accessed from the direction of the room.

The extension part 4 may be made of a plastic material. Also the box case 2 may be made of a plastic material. In an embodiment the extension part and box case are made of same plastic material.

It will be obvious to a person skilled in the art that the inventive concept can be implemented in various ways. The invention and its embodiments are not limited to the examples described above but may vary within the scope of the claims.

## Claims

1. A mounting box assembly comprising:
a box case (2) defining a mounting space for accommodating an electrical component at least partially, the box case (2) having a box opening (22) providing an access into the mounting space, **characterized in that**
the mounting box assembly further comprises an extension part (4) defining an extension space, the extension part (4) has a first extension part opening at an side thereof and a second extension part opening at an opposite side of the extension part (4) relative to the first extension part opening, each of the first extension part opening and the second extension part opening providing access into the extension space, the surface-area of the first extension part opening being larger than the surface-area of the box opening (22), and the surface-area of the second extension part opening being smaller than the surface-area of the first extension part opening, the extension part (4) being adapted to be attached to the box case (2) such that the second extension part opening is located adjacent the box opening (22), and the first extension part opening provides an access into the mounting space through the extension part (4).

2. A mounting box assembly according to claim 1, **characterized in that** the surface area of the second extension part opening is substantially the same as the surface area of the box opening (22).

3. A mounting box assembly according to claim 1 or 2, **characterized in that** an edge (415) of the first extension part opening and an edge (425) of the second extension part opening each define a corresponding plane.

4. A mounting box assembly according to claim 3, **characterized in that** a plane corresponding to the edge (415) of the first extension part opening is substantially parallel with a plane corresponding to the edge (425) of the second extension part opening, said planes being located at a distance from each other.

5. A mounting box assembly according to claim 3 or 4, **characterized in that** the extension part (4) comprises an inner bottom wall (46) defining a plane parallel to the plane corresponding to the edge (415) of the first extension part opening, the inner bottom wall (46) surrounding the second extension part opening.

6. A mounting box assembly according to any one of claims 3 to 5, **characterized in that** the extension part (4) comprises an inner side wall (48) extending substantially perpendicular to the plane corresponding to the edge (415) of the first extension part opening.

7. A mounting box assembly according to any one of claims 3 to 6, **characterized in that** the extension part (4) further comprises at least one side projection (6) having a supporting surface (61) defining a plane located at a distance from the plane corresponding to the edge (415) of the first extension part opening, the mounting box assembly being adapted to be fitted in an aperture of a wallboard (7) such that the supporting surface (61) of the at least one side projection (6) is in contact with an inner side of the wallboard (7).

8. A mounting box assembly according to any one of preceding claims, **characterized in that** the extension part (4) is adapted to be attached to the box case (2) with at least one screw (3).

9. A mounting box assembly according to any one of preceding claims, **characterized in that** the mounting box assembly is adapted for flush mounting of a grounded double socket outlet (9).

10. An extension part for a mounting box assembly, the extension part (4) defining an extension space, the extension part (4) has a first extension part opening at an side thereof and a second extension part opening at an opposite side of the extension part (4) relative to the first extension part opening, each of the first extension part opening and the second extension part opening providing access into the extension space, **characterized in that** the surface-area of the second extension part opening is smaller than the surface-area of the first extension part opening, the extension part (4) being adapted to be attached to a box case (2) of the mounting box assembly such that the second extension part opening is located adjacent a box opening (22) of the box case (2).
